# EUROPÄISCHE PATENTANMELDUNG

(11) **EP 1 783 407 A2**
(43) Veröffentlichungstag der Anmeldung: **09.05.2007**
(21) Anmeldenummer: 06121907.7
(22) Anmeldetag: 06.10.2006
(51) Int. Cl.: F16K 1/22, F16K 27/02

(54) **Drosselklappenstutzen**

(30) Priorität: 02.11.2005 DE 102005052362
(71) Anmelder: SIEMENS AKTIENGESELLSCHAFT, 80333 München (DE)
(72) Erfinder: Hannewald, Thomas, 64347, Griesheim (DE)

(57) **Zusammenfassung**

Der Drosselklappenstutzen besteht aus einem ersten Gehäuseteil (1) und einem zweiten Gehäuseteil (2). Das erste Gehäuseteil (1) oder das zweite Gehäuseteil (2) weisen innen eine erste umlaufende Nut (1a) oder eine zweite umlaufende Nut auf, in denen ein Ring (3) aus Aluminium oder einem Duroplast gasdicht angeordnet ist. Innerhalb des Ringes (3) ist eine Drosselklappenwelle (5) angeordnet, an der die Drosselklappe (4) aus Aluminium oder einem Thermoplast drehbar gelagert ist.

## Beschreibung

Die Erfindung bezieht sich auf einen Drosselklappenstutzen. Drosselklappenstutzen sind bekannt. In der DE 103 59 609 A1 wird ein Drosselklappenstutzen beschrieben, der in einem Luftkanal angeordnet ist. Die Drosselklappe ist dabei auf einer Drosselklappenwelle befestigt, die drehbar gelagert ist. Im geschlossenen Zustand trennt die Drosselklappe das Gehäuse in eine Saugseite und in eine Seite, in der Umgebungsdruck herrscht. Das Gehäuse selbst besteht aus einem ersten Gehäuseteil und einem zweiten Gehäuseteil, die bezüglich der Strömungsrichtung keine gemeinsame, sondern parallel zueinander verlaufende Längsachsen aufweisen. Die Strömungsrichtung verläuft somit nicht durchgehend geradlinig sondern erfährt in Inneren des Gehäuses eine kurzzeitige Änderung der Strömungsrichtung. In solchen Drosselklappenstutzen werden in der Regel Drosselklappen eingesetzt, die an ihren Außenkanten in der Regel mit Toleranzringen zu versehen sind, um die Ausbildung von Leckluft weitgehend zu minimieren. Dies ist aufgrund des konstruktiven Aufwandes nachteilig bei längeren Betriebszeiten.

Der Erfindung liegt daher die Aufgabe zugrunde, einen Drosselklappenstutzen zu schaffen, bei dem eine hohe Betriebssicherheit über längere Betriebszeiten ausreichend gewährleistet ist.

Die der Erfindung zugrunde liegende Aufgabe wird durch einen Drosselklappenstutzen gelöst, der aus einem ersten Gehäuseteil und einem zweiten Gehäuseteil besteht, bei dem das erste Gehäuseteil oder das zweite Gehäuseteil innen eine erste umlaufende Nut oder eine zweite umlaufende Nut aufweisen, in denen ein Ring aus Aluminium oder einem Duroplast angeordnet ist und bei dem innerhalb des Ringes eine Drosselklappenwelle angeordnet ist, an der eine Drosselklappe aus Aluminium oder einem Thermoplast drehbar gelagert ist. Die Drosselklappenwelle verläuft beidseitig durch den Ring aus Aluminium oder einem Duroplast. Das erste Gehäuseteil und das zweite Gehäuseteil weisen dieselbe Längsachse auf, wodurch sichergestellt ist, dass eine konstante Strömungsrichtung ohne Richtungsänderung im Inneren des Drosselklappenstutzens realisiert wird. Entweder weist das erste Gehäuseteil eine erste umlaufende Nut auf, oder das zweite Gehäuseteil weist eine zweite umlaufende Nut auf, oder sowohl das erste Gehäuseteil als auch das zweite Gehäuseteil weisen eine erste umlaufende Nut beziehungsweise eine zweite umlaufende Nut auf, die dann zusammenwirken. Die Fixierung des Ringes aus Aluminium oder einem Duroplast im ersten Gehäuseteil oder im zweiten Gehäuseteil erfolgt beispielsweise durch Einpressen des Ringes in das jeweilige Gehäuseteil. Die Drosselklappe aus Aluminium oder einem Thermoplast wird mit der Drosselklappenwelle beispielsweise mittels Schrauben befestigt. Dabei ist es allgemein besonders vorteilhaft, wenn die Drosselklappe und der Ring aus Aluminium bestehen. Es hat sich in überraschender Weise gezeigt, dass durch die Anordnung des Ringes aus Aluminium oder einem Duroplast im Zusammenwirken mit der Drosselklappe aus Aluminium oder einem Thermoplast eine hohe Betriebssicherheit über lange Betriebszeiten gewährleistet ist. Dabei ist besonders vorteilhaft, dass auf die Einstellung genauer Toleranzen bei der Fertigung des ersten Gehäuseteils und des zweiten Gehäuseteils verzichtet werden kann, so dass diese aus preiswerten Materialien hergestellt werden können.

Eine bevorzugte Ausgestaltung der Erfindung besteht darin, dass sowohl das erste Gehäuseteil eine erste umlaufende Nut als auch das zweite Gehäuseteil eine zweite umlaufende Nut zur gemeinsamen Aufnahme des Ringes aus Aluminium oder einem Duroplast aufweisen. In diesem Fall ist die erste umlaufende Nut seitlich nur an der dem zweiten Gehäuseteil abgewandten Seite begrenzt. Die zweite umlaufende Nut ist seitlich lediglich an der dem ersten Gehäuseteil abgewandten Seite seitlich begrenzt. Dies bedeutet, dass die erste umlaufende Nut und die zweite umlaufende Nut gemeinsam eine einzige, beidseitig seitlich begrenzte Nut bilden, in der der Ring aus Aluminium oder einem Duroplast positioniert wird. Dabei ist vorteilhaft, dass das erste Gehäuseteil und das zweite Gehäuseteil auf relativ einfache Weise zueinander zentriert werden können. Ferner wird die Stabilität des gesamten Drosselklappenstutzens dadurch in vorteilhafter Weise erhöht.

Gemäß einer weiteren bevorzugten Ausgestaltung der Erfindung ist vorgesehen, dass der Ring aus Aluminium oder einem Duroplast eine erste Aufnahme und eine direkt gegenüberliegende zweite Aufnahme für die Drosselklappenwelle aufweist, die als Lager für die Drosselklappenwelle im ersten Gehäuseteil und im zweiten Gehäuseteil dienen. Diese sind als seitlich anhängende Fortsätze ausgebildet. Auf diese Weise ist eine Lagerung der Drosselklassenwelle im Drosselklappenstutzen auf relativ einfache Weise möglich. Ferner wird die Serienfertigung erleichtert, da die Kombination aus dem Ring aus Aluminium oder einem Duroplast, der beispielsweise besonders vorteilhaft aus einem Stranggussprofil aus Aluminium gebildet werden kann, und der Drosselklappenwelle vorab als Teileinheit gefertigt werden kann.

Nach einer weiteren bevorzugten Ausgestaltung der Erfindung weist der Ring aus Aluminium oder einem Duroplast seitlich außen ein Rahmenteil auf, an dem der Elektromotor für den Antrieb fixiert ist. Das Rahmenteil kann dabei ein- oder mehrteilig ausgebildet sein. Es kann beispielsweise aus mehreren seitlichen Vorsprüngen des Ringes aus Aluminium oder einem Duroplast bestehen. Dabei ist vorteilhaft, dass die vom Elektromotor erzeugte Wärme über den Ring aus Aluminium oder einem Duroplast problemlos in den Strömungskanal des Drosselklappenstutzens abgeführt werden kann.

Gemäß einer weiteren Ausgestaltung der Erfindung weist das Rahmenteil mindestens ein Lager zur Lagerung von Getriebeteilen auf. Als Getriebeteil kann beispielsweise eine Achse für ein Zahnrad vorgesehen werden. Es ist jedoch auch möglich, andere Bauteile, die in Drosselklappenstutzen integriert werden müssen, an dem Ring aus Aluminium oder einem Duroplast über Lager zu lagern. Dabei kann unter der Bezeichnung "Lager" im weitesten Sinne auch eine Aufnahme für Befestigungsmittel angesehen werden, die beispielsweise mit dem Rahmen aus Aluminium oder einem Duroplast verschraubt oder vernietet werden.

Eine weitere bevorzugte Ausgestaltung der Erfindung besteht darin, dass das erste Gehäuseteil und das zweite Gehäuseteil aus einem Thermoplast bestehen. Dabei ist vorteilhaft, dass das erste Gehäuseteil und das zweite Gehäuseteil auf relativ einfache Weise, beispielsweise durch Laserschweißen, miteinander verbunden werden können. Dies vereinfacht die Herstellung des Drosselklappenstutzens zusätzlich.

Gemäß einer weiteren bevorzugten Ausgestaltung der Erfindung ist zwischen der Außenseite des Ringes aus Aluminium oder einem Duroplast und dem ersten Gehäuseteil oder dem zweiten Gehäuseteil eine Dichtung aus einem Elastomer angeordnet. Diese Dichtung wird dabei in vorteilhafter Weise in einer Nut gehalten, die entweder im Ring aus Aluminium oder einem Duroplast oder im ersten Gehäuseteil beziehungsweise im zweiten Gehäuseteil eingearbeitet worden ist. Auf diese Weise lässt sich eine Abdichtung zwischen der Saugseite und derjenigen Seite, in der Umgebungsdruck herrscht, relativ einfach realisieren.

Nach einer weiteren bevorzugten Ausgestaltung der Erfindung weist der Ring aus Aluminium oder einem Duroplast an mindestens einer Stirnseite einen ringförmigen Vorsprung auf, der in das erste Gehäuseteil oder in das zweite Gehäuseteil eingreift. Diese Maßnahme ermöglicht eine besonders vorteilhafte Abdichtung, sofern die Druckunterschiede zwischen der Saugseite und derjenigen Seite, in der Umgebungsdruck herrscht, besonders groß sind.

Nach einer weiteren Ausgestaltung der Erfindung ist in dem Eingriff ein Klebstoff angeordnet. Dadurch wird in vorteilhafter Weise die Dichtwirkung verstärkt.

Gemäß einer weiteren bevorzugten Ausgestaltung der Erfindung ist entweder das erste Gehäuseteil oder das zweite Gehäuseteil als Ende des Saugrohres ausgebildet. Die Serienfertigung wird in vorteilhafter Weise begünstigt, wenn das an der Saugseite angeordnete Saugrohr an seinem Ende konstruktiv bereits als erstes Gehäuseteil oder als zweites Gehäuseteil ausgebildet ist. Die Einheit aus Saugrohr und dem ersten Gehäuseteil beziehungsweise aus Saugrohr und dem zweiten Gehäuseteil lässt sich in vorteilhafter Weise vorab beispielsweise im Rahmen einer Serienfertigung fertigen, was die Herstellung des Drosselklappenstutzens vereinfacht.

Die Erfindung wird nachfolgend anhand der Zeichnung (Fig. 1 bis Fig. 7) näher und beispielhaft erläutert.

Fig. 1 zeigt den Drosselklappenstutzen mit dem ersten Gehäuseteil und dem zweiten Gehäuseteil.

Fig. 2 zeigt die Draufsicht auf das erste Gehäuseteil.

Fig. 3 zeigt den Ring aus Aluminium oder einem Duroplast in der Draufsicht.

Fig. 4 zeigt den Ring aus Aluminium oder einem Duroplast gemäß Fig. 3 in dreidimensionaler Form.

Fig. 5 zeigt den Ring aus Aluminium oder einem Duroplast mit einem Lager zur Lagerung von Getriebeteilen.

Fig. 6 zeigt einen Teil des Drosselklappenstutzens im Querschnitt mit dem Ring aus Aluminium oder einem Duroplast, der einen ringförmigen Vorsprung aufweist.

Fig. 7 zeigt das erste Gehäuseteil mit dem eingesetzten Ring aus Aluminium oder einem Duroplast in dreidimensionaler Form.

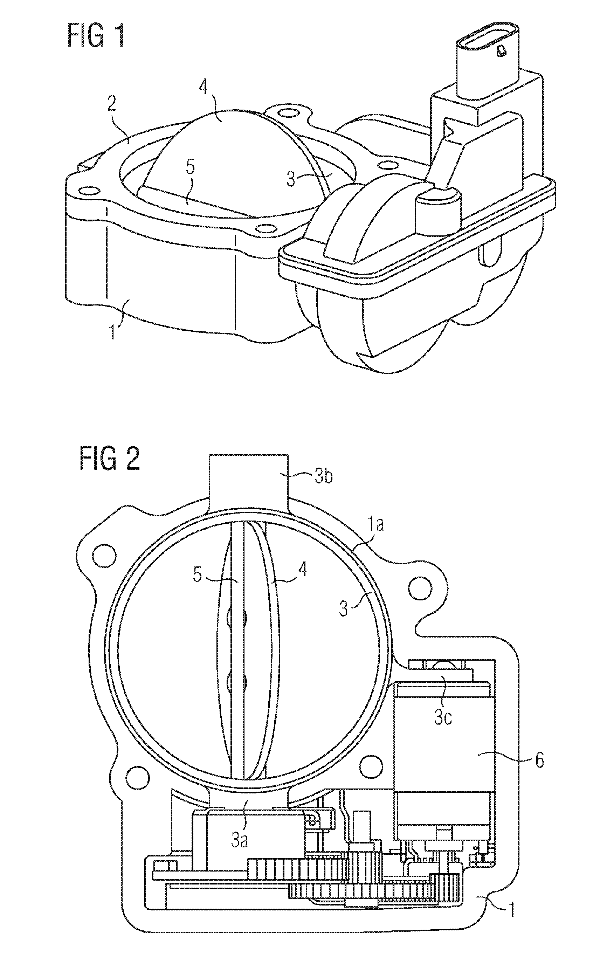

In Fig. 1 ist der Drosselklappenstutzen mit dem ersten Gehäuseteil 1 und dem zweiten Gehäuseteil 2 dreidimensional dargestellt. Der Drosselklappenstutzen weist einen Ring 3 aus Aluminium oder einem Duroplast auf, innerhalb dessen eine Drosselklappenwelle 5 angeordnet ist, an der eine Drosselklappe 4 aus Aluminium oder einem Thermoplast drehbar gelagert ist. Das erste Gehäuseteil 1 und das zweite Gehäuseteil 2 weisen bezüglich der Strömungsrichtung dieselbe Längsachse auf.

In Fig. 2 ist das erste Gehäuseteil 1 in der Draufsicht dargestellt. Das erste Gehäuseteil 1 weist eine erste umlaufende Nut 1a auf, in der ein Ring 3 aus Aluminium oder einem Duroplast gasdicht angeordnet ist. Die gasdichte Anordnung kann dabei beispielsweise durch die Anordnung einer Ringdichtung (nicht dargestellt) zwischen der Außenseite des Ringes 3 aus Aluminium oder einem Duroplast und dem ersten Gehäuseteil 1 realisiert werden. Innerhalb des Ringes 3 ist eine Drosselklappenwelle 5 angeordnet, an der eine Drosselklappe 4 aus Aluminium oder einem Thermoplast drehbar gelagert ist. Der Ring 3 aus Aluminium oder einem Duroplast weist eine erste Aufnahme 3a und eine direkt gegenüberliegende zweite Aufnahme 3b für die Drosselklappenwelle 5 auf, die als Lager für die Drosselklappenwelle 5 im ersten Gehäuseteil 1 dienen. Der Ring 3 aus Aluminium oder einem Duroplast weist ferner außen ein Rahmenteil 3c auf, an dem der Elektromotor 6 für den Antrieb fixiert ist. Der Elektromotor 6 kann dabei beispielsweise an das Rahmenteil 3c angeschraubt sein.

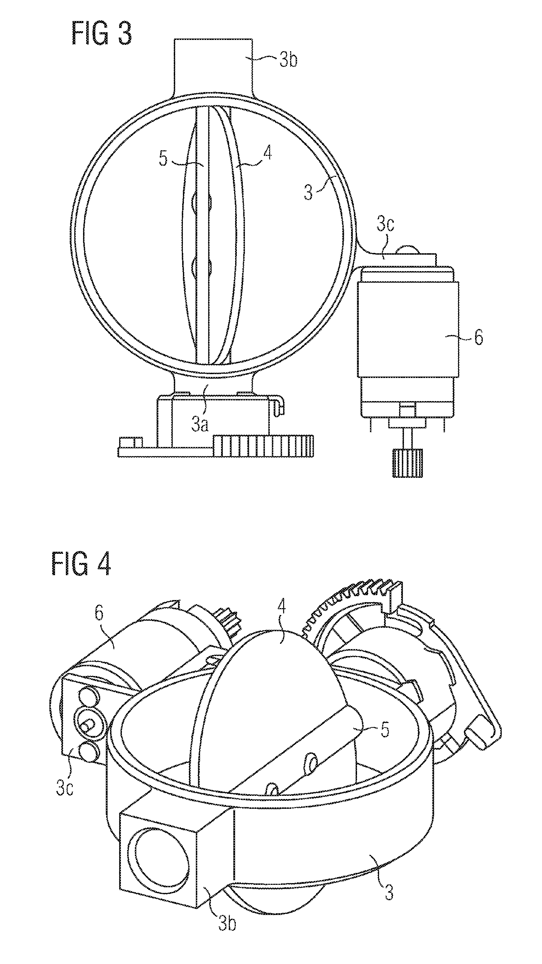

In Fig. 3 ist der Ring 3 aus Aluminium oder einem Duroplast gemäß Fig. 2 ohne das erste Gehäuseteil dargestellt. Das Rahmenteil 3c ist in Form eines seitlichen Fortsatzes ausgeführt. Somit ist es nicht zwingend notwendig, dass das Rahmenteil 3c in Form eines geschlossenen Rahmens konstruktiv ausgebildet ist. Je nach dem Herstellungsverfahren des Drosselklappenstutzens ist es jedoch auch möglich, das Rahmenteil c in Form eines geschlossenen Rahmens zu fertigen.

In Fig. 4 ist der Ring 3 aus Aluminium oder einem Duroplast gemäß Fig. 3 in dreidimensionaler Form dargestellt. Der Elektromotor 6 ist am Rahmenteil 3c angeschraubt.

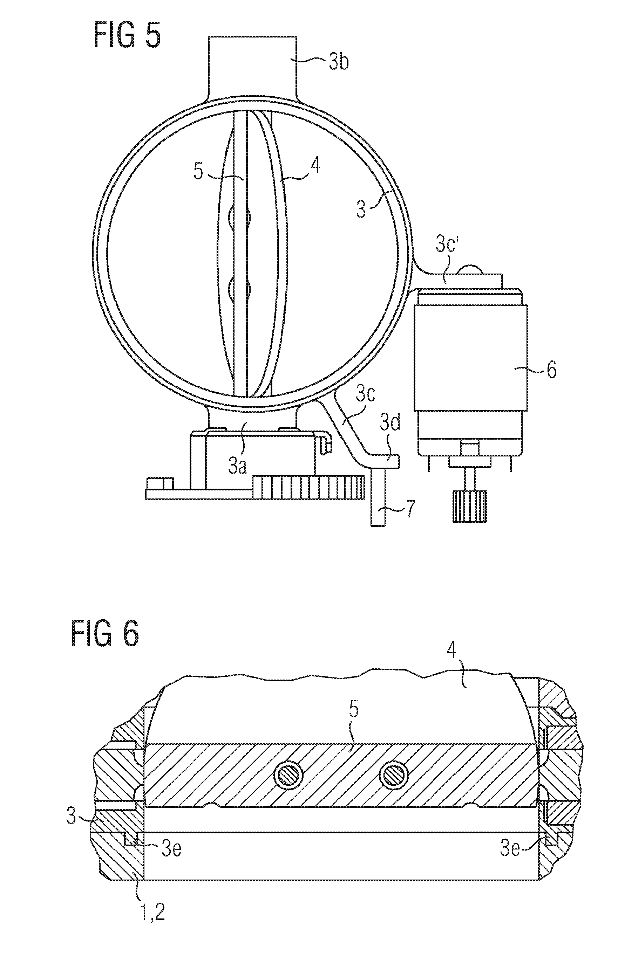

In Fig. 5 ist eine alternative Ausgestaltung des Ringes 3 aus Aluminium oder einem Duroplast dargestellt. Das Rahmenteil 3c ist dabei zweiteilig ausgeführt, wobei ein Teil zur Fixierung des Elektromotors 6 dient und das andere Teil ein Lager 3d aufweist, das zur Lagerung einer als Getriebeteil 7 angeordneten Achse für Zahnsegmente ausgebildet ist.

In Fig. 6 ist ein Teil des Drosselklappenstutzens im Querschnitt dargestellt. Der Ring 3 aus Aluminium oder einem Duroplast weist dabei an einer Stirnseite einen ringförmigen Vorsprung 3e auf, der in das erste Gehäuseteil 1 oder in das zweite Gehäuseteil 2 eingreift. Auf diese Weise wird eine sehr gute Abdichtwirkung erzielt. Diese kann noch verstärkt werden, wenn man im Eingriff einen Klebstoff anordnet.

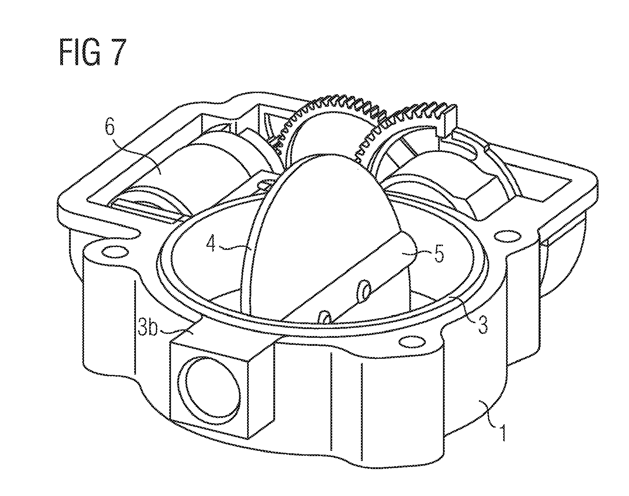

In Fig. 7 ist das erste Gehäuseteil 1 des Drosselklappenstutzens mit eingesetztem Ring 3 aus Aluminium oder einem Duroplast dreidimensional dargestellt. Durch die konstruktive Ausgestaltung des Drosselklappenstutzens lässt sich besonders vorteilhaft zusätzlicher Bauraum gewinnen, der dann für die Anordnung von Federelementen genutzt werden kann. Das erste Gehäuseteil 1 und das zweite Gehäuseteil (nicht dargestellt) werden bevorzugt aus einem Thermoplast gefertigt. Sie können in vorteilhafter Weise durch Laserschweißen miteinander verbunden werden. Dabei kann das erste Gehäuseteil 1 oder das zweite Gehäuseteil als Ende des Saugrohres ausgebildet sein.

## Patentansprüche

1. Drosselklappenstutzen, der aus einem ersten Gehäuseteil (1) und einem zweiten Gehäuseteil (2) besteht, bei dem das erste Gehäuseteil (1) oder das zweite Gehäuseteil (2) innen eine erste umlaufende Nut (1a) oder eine zweite umlaufende Nut aufweisen, in denen ein Ring (3) aus Aluminium oder einem Duroplast gasdicht angeordnet ist und bei dem innerhalb des Ringes (3) eine Drosselklappenwelle (5) angeordnet ist, an der eine Drosselklappe (4) aus Aluminium oder einem Thermoplast drehbar gelagert ist.

2. Drosselklappenstutzen nach Anspruch 1, bei dem sowohl das erste Gehäuseteil (1) eine erste umlaufende Nut (1a) als auch das zweite Gehäuseteil (2) eine zweite umlaufende Nut zur gemeinsamen Aufnahme des Ringes (3) aus Aluminium oder einem Duroplast aufweisen.

3. Drosselklappenstutzen nach Anspruch 1 oder Anspruch 2, bei dem der Ring (3) aus Aluminium oder einem Duroplast eine erste Aufnahme (3a) und eine direkt gegenüberliegende zweite Aufnahme (3b) für die Drosselklappenwelle (5) aufweist, die als Lager für die Drosselklappenwelle (5) im ersten Gehäuseteil (1) oder im zweiten Gehäuseteil (2) dienen.

4. Drosselklappenstutzen nach einem der Ansprüche 1 bis 3, bei dem der Ring (3) aus Aluminium oder einem Duroplast seitlich außen ein Rahmenteil (3c) aufweist, an dem der Elektromotor (6) für den Antrieb fixiert ist.

5. Drosselklappenstutzen nach Anspruch 4, bei dem das Rahmenteil (3c) mindestens ein Lager (3d) zur Lagerung von Getriebeteilen (7) aufweist.

6. Drosselklappenstutzen nach einem der Ansprüche 1 bis 5, bei dem das erste Gehäuseteil (1) und das zweite Gehäuseteil (2) aus einem Thermoplast bestehen.

7. Drosselklappenstutzen nach einem der Ansprüche 1 bis 6, bei dem zwischen der Außenseite des Ringes (3) aus Aluminium oder einem Duroplast und dem ersten Gehäuseteil (1) oder dem zweiten Gehäuseteil (2) eine Dichtung (6) aus einem Elastomer angeordnet ist.

8. Drosselklappenstutzen nach einem der Ansprüche 1 bis 6, bei dem der Ring (3) aus Aluminium oder einem Duroplast an mindestens einer Stirnseite einen ringförmigen Vorsprung (3e) aufweist, der in das erste Gehäuseteil (1) oder in das zweite Gehäuseteil (2) eingreift.

9. Drosselklappenstutzen nach Anspruch 8, bei dem im Eingriff ein Klebstoff angeordnet ist.

10. Drosselklappenstutzen nach einem der Ansprüche 1 bis 9, bei dem entweder das erste Gehäuseteil (1) oder das zweite Gehäuseteil (2) als Ende des Saugrohres ausgebildet ist.
